# EUROPEAN PATENT APPLICATION

(11) **EP 2 579 589 A1**
(43) Date of publication of application: **10.04.2013**
(21) Application number: 10852422.4
(22) Date of filing: 04.11.2010
(51) Int. Cl.: H04N 7/16

(54) **ENCRYPTION METHOD FOR TELEVISION SERVICE OF MOBILE TERMINAL, MOBILE TERMINAL AND SERVER THEREOF**

(30) Priority: 02.06.2010 CN 201010190232
(71) Applicant: ZTE Corporation, Shenzhen, Guangdong 518057 (CN)
(72) Inventor: HE, Lipeng, Shenzhen, Guangdong 518057 (CN); ZHANG, Shuyan, Shenzhen, Guangdong 518057 (CN)
(74) Representative: Müller-Boré & Partner Patentanwälte
(86) International application number: PCT/CN2010/078424
(87) International publication number: WO 2011/150627

(57) **Abstract**

The present invention provides an encryption method for a television service of a mobile terminal, a mobile terminal and a server. The method comprises: a mobile terminal ordering and obtaining a program that has not been subscribed; the mobile terminal encrypting the program to shield a part of data of the program; and the mobile terminal playing the program that is encrypted. The encryption method for the television service of the mobile terminal, the mobile terminal and the server provided in the present invention can encrypt the program, which is ordered but has not been subscribed by the user, at the mobile terminal side or the server side so as to play the program after shielding a part of data of the program, thus certain experience can be enjoyed by the user, and the content of the program is protected.

## Description

### Field of the Invention

The present invention relates to the technical field of communications, in particular to an encryption method for a television service of a mobile terminal, a mobile terminal and a server.

### Background of the Invention

A television service of a mobile terminal such as a mobile phone is actually realized in such a way that: a streaming media technology is utilized to launch a mobile terminal television as a data service, and what users see is downloaded video data. In a current encryption method for a television service of a mobile terminal, all television programs provided by a service provider are encrypted, a user is authorized by the service provider only when the user has subscribed a mobile terminal television program, then the user can order the subscribed program. Such encryption method for the television service of the mobile terminal has one defect: usually, users want to watch a part of data of a program before subscribing the program to decide whether to subscribe the program depending on the experience, however, according to the current encryption method for the television service of the mobile terminal, for users who have not subscribed the program, data is completely shielded and cannot be watched, the users cannot have experience of the program, therefore, the popularization of the television service of the mobile phone is limited.

### Summary of the Invention

The present invention provides an encryption method for a television service of a mobile terminal, a mobile terminal and a server, so that the service provider can popularize the television service of the mobile terminal such as a mobile phone better.

The present invention proposes an encryption method for a television service of a mobile terminal, comprising: a mobile terminal ordering and obtaining a program that has not been subscribed; the mobile terminal encrypting the program to shield a part of data of the program; and the mobile terminal playing the program that is encrypted.

Preferably, the step of the mobile terminal ordering and obtaining the program that has not been subscribed comprises: when ordering the program that has not been subscribed, the mobile terminal sending an identification code of the mobile terminal and a card number of a user identification card of the mobile terminal, to obtain a decryption key of the program; and downloading and obtaining the program with the decryption key.

Preferably, the identification code of the mobile terminal is a model number of the mobile terminal.

Preferably, the step of encrypting the program to shield a part of data of the program comprises: creating at least one color interference region, and covering the at least one color interference region on a part of video data of the program; and/or, performing audio mixing on a part of audio data of the program.

The present invention proposes a mobile terminal, comprising: an obtaining module, configured to order and obtain a program that has not been subscribed; an encryption module, configured to encrypt the program to shield a part of data of the program; and a playing module, configured to play the program that is encrypted.

Preferably, the obtaining module comprises: an authentication module, configured to, when ordering the program that has not been subscribed, send an identification code of the mobile terminal and a card number of a user identification card of the mobile terminal, to obtain a decryption key of the program; and a downloading module, configured to download and obtain the program with the decryption key.

Preferably, the identification code of the mobile terminal is a model number of the mobile terminal.

Preferably, the encryption module comprises: a video interference unit, configured to create at least one color interference region, and cover the at least one color interference region on a part of video data of the program; and/or, an audio 2 interference unit, configured to perform audio mixing on a part of audio data of the program.

The present invention proposes an encryption method for a television service of a mobile terminal, comprising: when a mobile terminal orders a program that has not been subscribed, a server encrypting the program to shield a part of data of the program, and creating a new channel for the program that is encrypted; and the server sending information about the new channel and a decryption key to the mobile terminal.

Preferably, the step of encrypting the program to shield a part of data of the program comprises: creating at least one color interference region, and covering the at least one color interference region on a part of video data of the program; and/or, performing audio mixing on a part of audio data of the program.

The present invention proposes a server, used for a television service of a mobile terminal, wherein the server comprises: an encryption module, configured to, when a mobile terminal orders a program that has not been subscribed, encrypt the program to shield a part of data of the program, and create a new channel for the program that is encrypted; and a sending module, configured to send information about the new channel and a decryption key to the mobile terminal.

Preferably, the encryption module further comprises: a video interference unit, configured to create at least one color interference region, and cover the at least one color interference region on a part of video data of the program; and/or, an audio interference unit, configured to perform audio mixing on a part of audio data of the program.

The encryption method for the television service of the mobile terminal, the mobile terminal and the server provided in the present invention can encrypt the program, which is ordered but has not been subscribed by the user, at the mobile terminal side or the server side so as to play the program after shielding a part of data of the program, thus certain experience can be enjoyed by the user, and the content of the program is protected, therefore the television service of the mobile terminal such as a mobile phone can be popularized greatly.

### Brief Description of the Drawings

Fig. 1 is a flow chart of an embodiment of an encryption method for a television service of a mobile terminal in the present invention;
Fig. 2 is a structure diagram of an embodiment of a mobile terminal in the present invention;
Fig. 3 is a structure diagram of an encryption module in an embodiment of the mobile terminal in the present invention;
Fig. 4 is a flow chart of an embodiment of another encryption method for a television service of a mobile terminal in the present invention;
Fig. 5 is a structure diagram of an embodiment of a server in the present invention; and
Fig. 6 is a structure diagram of an encryption module in an embodiment of the server in the present invention.

The implementation, functions, characteristics and advantages of the present invention will be further described below with reference to drawings in combination with embodiments.

### Detailed Description of the Embodiments

An encryption method for a television service of a mobile terminal, a mobile terminal and a server provided in the embodiments of the present invention can encrypt a program, which is ordered but has not been subscribed by a user, at the mobile terminal side or the server side so as to play the program after shielding a part of data of the program.

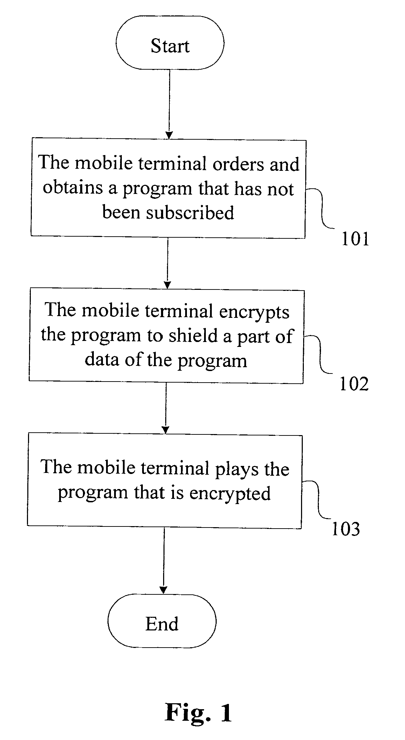

With reference to Fig. 1, a flow chart of an embodiment of an encryption method for a television service of a mobile terminal in the present invention is shown, and the method comprises the steps as follows.

Step 101: a mobile terminal orders and obtains a program that has not been subscribed.

Preferably, if a program sending end encrypts the program, when ordering the program that has not been subscribed, the mobile terminal can send an identification code of the mobile terminal and a card number of a user identification card of the mobile terminal to the program sending end to obtain a decryption key of the program; and then, the mobile terminal can download the program with the decryption key.

Step 102: the mobile terminal encrypts the program to shield a part of data of the program.

Step 103: the mobile terminal plays the program that is encrypted.

Step 102 is specifically as follows:
at least one color interference region is created, and the at least one color interference region is covered on a part of video data of the program; and/or, perform audio mixing on a part of audio data of the program.

By taking a case that the mobile terminal sends the identification code of the mobile terminal and the card number of the user identification card to the program sending end as an example, the working principle of the encryption method for the television service of the mobile terminal in the preferable embodiment of the present invention will be described in details below.

A mobile terminal such as a mobile phone initiates an order request of a certain program to the server providing the television service of the mobile terminal, and sends the identification code of the mobile terminal and the card number of the user identification card of the mobile terminal after establishing a data link with the server; the server locally inquires a user subscription list of the user according to the card number of the user identification card of the mobile terminal, so as to obtain whether the card number has subscribed the program, whether the program is a free program and other information, if finding that the card number has not subscribed the program and the program is not a free program, the server further checks the identification code of the mobile terminal, which is generally the model number of the mobile terminal, and the server will send a decryption key of the program that is ordered by the mobile terminal to the mobile terminal if only the mobile terminal has a specific model number, that is, the mobile terminal has a multimedia information encryption function.

After obtaining the decryption key, the mobile terminal downloads the program that is ordered (program on demand) with the decryption key.

It should be noted that, the mobile terminal may not send the identification code of the mobile terminal and the card number of the user identification card to the program sending end, instead, it directly obtains the program and then judges whether the program is a program that has not been subscribed, if so, the mobile terminal encrypts the program.

After downloading the program that is ordered, the mobile terminal encrypts data of the program to shield a part of data of the program, so that the mobile terminal user can have experience on the program, but cannot watch the complete program. The encryption process is described as follows.

The program downloaded by the mobile terminal comprises video data and audio data. The video data exist in a format of bitmap in the mobile terminal after being decoded, and the data array of the bitmap is a linear array. For example, the size of the video data is 320*240, then the mobile terminal can create one color interference region, for example one black rectangular interference region with a size of 160*120. The creation process can be the following sentences:

```
   For (i = 0, i < 240, i++)
    {
   MEMSET (pDATA + 160, 0,160*2);
   }
```

wherein 'MEMSET' is an encryption function for encrypting the program, and 'pDATA' is a temporary variable for indicating the location of the color interference region.

The color interference region is covered at the very center of the video data of the downloaded program, so that, when playing the program, the mobile terminal can play the program normally, but the user can not watch the complete program.

The mobile terminal also can encrypt audio data to shield a part of the audio data of the program. Other audio data is selectively added into the audio data downloaded and decoded by the mobile terminal for purpose of audio mixing, the method is described as follows:

```
    add other audio data after the audio data,
    if((sample1 < 0) && (sample2 < 0)) {
         value = sample1 + sample2 - (sample1 * sample2 / -(pow(2,16-1)-1));
         }else{
         value = samplel + sample2 - (sample1 * sample2 / (pow(2,16-1)-1));
         }
```

wherein 'sample1' is the original audio data, 'sample2' is the audio data to be mixed into the original audio data, and 'value' is the encrypted audio data.

The encryption for the video data and the audio data of the download program can be performed alternatively or simultaneously.

Attention should be paid that the encryption for contents of the program by the mobile terminal is not limited to the above encryption method, and other similar methods with an encryption effect also can be employed.

In the method, the program is encrypted at the mobile terminal side, so that the mobile terminal can protect the contents of the television program that has not been subscribed while providing certain experience on the television program for the user, therefore, the television service of the mobile phone is popularized greatly.

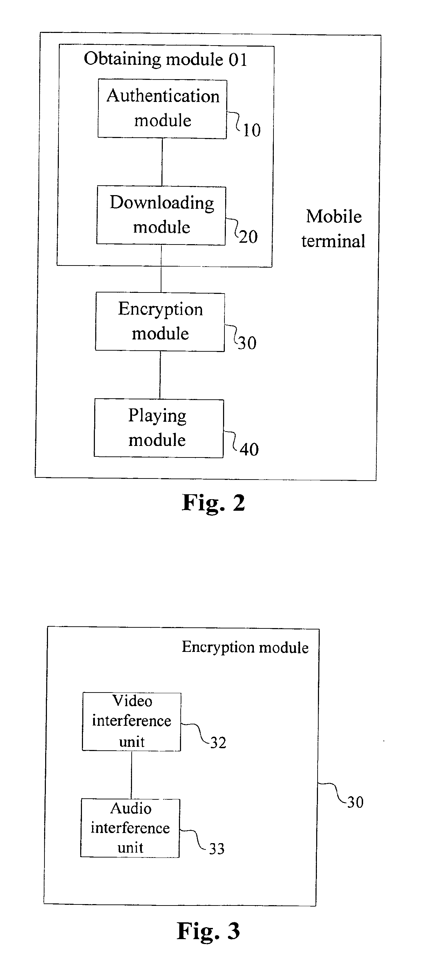

With reference to Fig. 2 and Fig. 3, a structure diagram of an embodiment of a mobile terminal in the present invention is shown, and the mobile terminal comprises:
an obtaining module 01, configured to order and obtain a program that has not been subscribed;
an encryption module 30, configured to encrypt the program to shield a part of data of the program; and
a playing module 40, configured to play the program that is encrypted.

The obtaining module 01 comprises:
an authentication module 10, configured to, when ordering the program that has not been subscribed, send an identification code of the mobile terminal and a card number of a user identification card of the mobile terminal, to obtain a decryption key of the program; and
a downloading module 20, configured to download and obtain the program with the decryption key.

The encryption module 30 further comprises:
a video interference unit 32, configured to create at least one color interference region, and cover the at least one color interference region on a part of video data of the program; and/or, an audio interference unit 33, configured to perform audio mixing on a part of audio data of the program.

The working principle of the mobile terminal in the embodiment will be described in details below.

A mobile terminal such as a mobile phone initiates an order request of a certain program to the server providing the television service of the mobile terminal, after establishing a data link with the server, the authentication module 10 sends the identification code of the mobile terminal and the card number of the user identification card of the mobile terminal; the server locally inquires a user subscription list of the card number, so as to obtain whether the card number has subscribed the program, whether the program is a free program and other information, if finding that the card number has not subscribed the program and the program is not a free program, the server further checks the identification code of the mobile terminal, which is generally the model number of the mobile terminal, and the server will send a decryption key of the program that is ordered by the mobile terminal to the mobile terminal if only the mobile terminal has a specific model number, that is, the mobile terminal has a multimedia information encryption function.

After the mobile terminal obtains the decryption key, the downloading module 20 downloads the program that is ordered with the decryption key.

After the mobile terminal downloads the program that is ordered, the encryption module 30 encrypts the program to shield a part of data of the program, so that the mobile terminal user can have experience on the program, but cannot watch the complete program. The encryption process is described as follows.

The program downloaded by the mobile terminal comprises video data and audio data. The video data exist in a format of bitmap in the mobile terminal after being decoded, and the data array of the bitmap is a linear array. For example, the size of the video data is 320*240, then the video interference unit 32 can create one color interference region, for example one black rectangular interference region with a size of 160* 120. The creation process can be the following sentences:

```
   For (i = 0, i < 240, i++)
    {
   MEMSET (pDATA + 160, 0,160*2);
    }
```

The video interference unit 32 covers the color interference region at the very center of the video data of the downloaded program so as to complete the encryption. The playing module 40 can play the program, but can not play the complete program, what the user watch is only the program which is coated with the color region in the center.

The audio interference unit 33 of the mobile terminal can encrypt audio data to shield a part of the audio data of the program. Other audio data is selectively added into the audio data downloaded and decoded by the mobile terminal for purpose of audio mixing, the method is described as follows:

```
   add other audio data after the audio data,
   if((sample1 < 0) && (sample2 < 0)) {
        value = sample1 + sample2 - (sample1 * sample2 / -(pow(2,16-1)-1));
        }else{
        value = sample1 + sample2 - (sample1 * sample2 / (pow(2,16-1)-1));
        }
```

wherein 'ample1' is the original audio data, 'sample2' is the audio data to be mixed into the original audio data, and 'value' is the encrypted audio data.

The video interference unit 32 and the audio interference unit 33 can exist separately or simultaneously.

Attention should be paid that the encryption for contents of the program by the mobile terminal is not limited to the above encryption method, and other similar methods with an encryption effect also can be employed.

The program is encrypted by the mobile terminal, so that the mobile terminal can protect the contents of the television program that has not been subscribed while providing certain experience on the television program for the user, therefore, the television service of the mobile phone is popularized greatly.

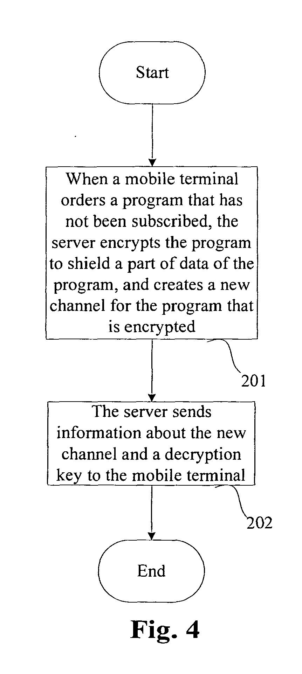

With reference to Fig. 4, a flow chart of an embodiment of another encryption method for a television service of a mobile terminal in the present invention is shown, and the method comprises:
Step 201: when a mobile terminal orders a program that has not been subscribed, a server encrypts the program to shield a part of data of the program, and creates a new channel for the program that is encrypted;
Step 202: the server sends information about the channel and a decryption key to the mobile terminal.

Step 201 is specifically as follows:
at least one color interference region is created, and the at least one color interference region is covered on a part of video data of the program; and/or,
perform audio mixing on a part of audio data of the program.

The working principle of the method in the embodiment will be described in details below.

A mobile terminal such as a mobile phone initiates an order request of a certain program to the server providing the television service of the mobile terminal, and sends a card number of a user identification card to the server after establishing a data link with the server; the server locally inquires a user subscription list of the user according to the card number of the user identification card of the mobile terminal, so as to obtain whether the card number has subscribed the program, whether the program is a free program and other information, if finding that the card number has not subscribed the program and the program is not a free program, the server encrypts the program to shield a part of data of the program, and creates a new channel for the program that is encrypted. The encryption process is described as follows.

Video data of the program provided by the server exists in a format of bitmap after being decoded, and the data array of the bitmap is a linear array. For example, the size of the video data is 320*240, then the server can create one color interference region, for example one black rectangular interference region with a size of 160*120. The creation process can be the following sentences:

```
    For (i = 0, i < 240, i++)
    {
   MEMSET (pDATA + 160, 0,160*2);
    }
```

The color interference region is covered at the very center of the video data of the program, so as to complete the encryption for the video data of the program.

The server also can encrypt audio data to shield a part of the audio data of the program. Other audio data is selectively added into the original audio data for the purpose of audio mixing, the method is described as follows:

```
    add other audio data after the audio data,
   if((sample1 < 0) && (sample2 < 0)) {
        value = sample1 + sample2 - (sample1 * sample2 / -(pow(2,16-1)-1));
        }else{
        value = sample1 + sample2 - (sample1 * sample2 / (pow(2,16-1)-1));
        }
```

wherein 'sample1' is the original audio data, 'sample2' is the audio data to be mixed into the original audio data, and 'value' is the encrypted audio data.

The encryption for the video data and the audio data can be performed alternatively or simultaneously.

The server creates a new channel for the program that is encrypted and sends information about the new channel and the decryption key of the new channel to the mobile terminal. After receiving the information about the new channel, the mobile terminal automatically switches to the channel and plays the program with the decryption key, wherein the program played by the mobile terminal is a program, a part of data of which are shielded, not a complete program.

Attention should be paid to that the encryption for contents of the program by the server is not limited to the above encryption method, and other similar methods with an encryption effect also can be employed.

In the method, the program is encrypted at the server side serving as a data source, so that the mobile terminal users can have certain experience on a television program that has not been subscribed, and the content of the program is protected, therefore, the television service of the mobile phone is popularized greatly.

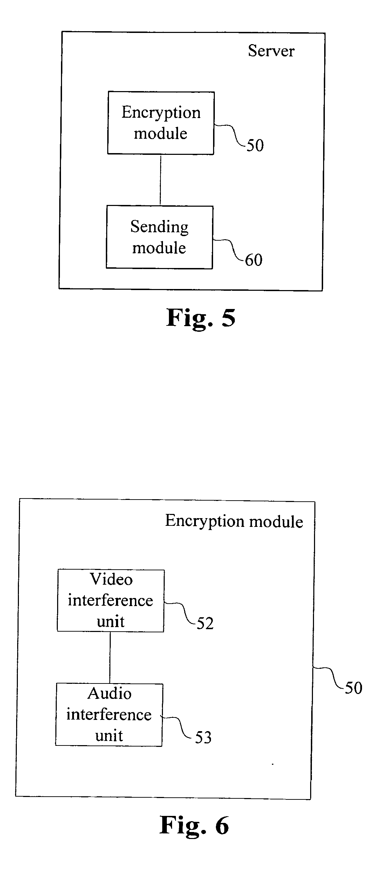

With reference to Fig. 5 and Fig. 6, a structure diagram of an embodiment of a server in the present invention is shown, the server is used for a television service of a mobile terminal, and the server comprises:
an encryption module 50, configured to, when a mobile terminal orders a program that has not been subscribed, encrypt the program to shield a part of data of the program, and create a new channel for the program that is encrypted; and
a sending module 60, configured to send information about the new channel and a decryption key to the mobile terminal.

The encryption module 50 comprises:
a video interference unit 52, configured to create at least one color interference region, and cover the at least one color interference region on a part of video data of the program; and/or, an audio interference unit 53, configured to perform audio mixing on a part of audio data of the program.

The working principle of the server in the embodiment will be described in details below.

A mobile terminal such as a mobile phone initiates an order request of a certain program to the server providing the television service of the mobile terminal, and sends a card number of a user identification card to the server after establishing a data link with the server; the server locally inquires a user subscription list of the user according to the card number of the user identification card of the mobile terminal, so as to obtain whether the card number has subscribed the program, whether the program is a free program and other information, if finding that the card number has not subscribed the program and the program is not a free program, the encryption module 50 encrypts the program to shield a part of data of the program, and creates a new channel for the program that is encrypted. The encryption process is described as follows.

Video data of the program provided by the server exists in a format of bitmap after being decoded, and the data array of the bitmap is a linear array. For example, the size of the video data is 320*240, then the video interference unit 52 can create one color interference region, for example one black rectangular interference region with a size of 160* 120. The creation process can be the following sentences:

```
    For (i = 0, i < 240, i++)
    {
    MEMSET (pDATA + 160, 0,160*2);
    }
```

The video interference unit 52 covers the color interference region at the very center of the video data of the program so as to complete the partial encryption for the data of the program.

The audio interference unit 53 of the server can encrypt audio data to shield a part of the audio data of the program. Other audio data is selectively added into the original audio data for the purpose of audio mixing, the method is described as follows:

```
    add other audio data after the audio data,
    if((sample1 < 0) && (sample2 < 0)) {
        value = sample1 + sample2 - (sample1 * sample2 / -(pow(2,16-1)-1));
         }else{
        value = sample1 + sample2 - (sample1 * sample2 / (pow(2,16-1)-1));
         }
```

wherein 'ample1' is the original audio data, 'sample2' is the audio data to be mixed into the original audio data, and 'value' is the encrypted audio data.

The video interference unit 52 and the audio interference unit 53 can exist separately or simultaneously.

The encryption module 50 creates a new channel for the program that is encrypted, the sending module 60 sends information about the new channel and the decryption key of the new channel to the mobile terminal. After receiving the information about the new channel, the mobile terminal automatically switches to the channel and plays the program with the decryption key, wherein the program played by the mobile terminal is a program, a part of data of which are shielded, not a complete program.

Attention should be paid to that the encryption for contents of the program by the server is not limited to the above encryption method, and other similar methods with an encryption effect also can be employed.

In the embodiment, the server encrypts the program, so that the mobile terminal can have certain experience on a television program that has not been subscribed, and the content of the program is protected, therefore, the television service of the mobile phone is popularized greatly.

The above contents just describe preferable embodiments of the present invention and are not intended to limit the patent scope of the present invention. Any equivalent structure or equivalent flow transform made by utilizing contents of the specification and drawings in the present invention, or any direct or indirect application in other relevant technical fields, should be comprised within the patent protection scope of the present invention.

## Claims

1. An encryption method for a television service of a mobile terminal, **characterized by** comprising:
a mobile terminal ordering and obtaining a program that has not been subscribed;
the mobile terminal encrypting the program to shield a part of data of the program; and
the mobile terminal playing the program that is encrypted.

2. The encryption method for the television service of the mobile terminal according to claim 1, **characterized in that** the step of the mobile terminal ordering and obtaining the program that has not been subscribed comprises:
when ordering the program that has not been subscribed, the mobile terminal sending an identification code of the mobile terminal and a card number of a user identification card of the mobile terminal, to obtain a decryption key of the program; and
downloading and obtaining the program with the decryption key.

3. The encryption method for the television service of the mobile terminal according to claim 1 or 2, **characterized in that** the identification code of the mobile terminal is a model number of the mobile terminal.

4. The encryption method for the television service of the mobile terminal according to claim 1 or 2, **characterized in that** the step of encrypting the program to shield a part of data of the program comprises:
creating at least one color interference region, and covering the at least one color interference region on a part of video data of the program; and/or,
performing audio mixing on a part of audio data of the program.

5. A mobile terminal, **characterized by** comprising:
an obtaining module, configured to order and obtain a program that has not been subscribed;
an encryption module, configured to encrypt the program to shield a part of data of the program; and
a playing module, configured to play the program that is encrypted.

6. The mobile terminal according to claim 5, **characterized in that** the obtaining module comprises:
an authentication module, configured to, when ordering the program that has not been subscribed, send an identification code of the mobile terminal and a card number of a user identification card of the mobile terminal, to obtain a decryption key of the program; and
a downloading module, configured to download and obtain the program with the decryption key.

7. The mobile terminal according to claim 5 or 6, **characterized in that** the identification code of the mobile terminal is a model number of the mobile terminal.

8. The mobile terminal according to claim 5 or 6, **characterized in that** the encryption module comprises:
a video interference unit, configured to create at least one color interference region, and cover the at least one color interference region on a part of video data of the program; and/or,
an audio interference unit, configured to perform audio mixing on a part of audio data of the program.

9. An encryption method for a television service of a mobile terminal, **characterized by** comprising:
when a mobile terminal orders a program that has not been subscribed, a server encrypting the program to shield a part of data of the program, and creating a new channel for the program that is encrypted; and
the server sending information about the new channel and a decryption key to the mobile terminal.

10. The encryption method for the television service of the mobile terminal according to claim 9, **characterized in that** the step of encrypting the program to shield a part of data of the program comprises:
creating at least one color interference region, and covering the at least one color interference region on a part of video data of the program; and/or,
performing audio mixing on a part of audio data of the program.

11. A server, used for a television service of a mobile terminal, **characterized in that** the server comprises:
an encryption module, configured to, when a mobile terminal orders a program that has not been subscribed, encrypt the program to shield a part of data of the program, and create a new channel for the program that is encrypted; and
a sending module, configured to send information about the new channel and a decryption key to the mobile terminal.

12. The server according to claim 11, **characterized in that** the encryption module further comprises:
a video interference unit, configured to create at least one color interference region, and cover the at least one color interference region on a part of video data of the program; and/or,
an audio interference unit, configured to perform audio mixing on a part of audio data of the program.
